# DEMANDE DE BREVET EUROPEEN

(11) **EP 0 757 235 A1**
(43) Date de publication de la demande: **05.02.1997**
(21) Numéro de dépôt: 96401709.9
(22) Date de dépôt: 31.07.1996
(51) Int. Cl.: G01K 13/02

(54) **Dispositif de mesure de la température d'un gaz chaud**

(30) Priorité: 02.08.1995 FR 9509437
(71) Demandeur: ELF ANTAR FRANCE, 92400 Courbevoie (FR)
(72) Inventeur: Drouet, Pierre, 69530 Brignais (FR)
(74) Mandataire: Boillot, Marc

(57) **Abrégé**

L'invention concerne un dispositif de mesure de la température d'un gaz chaud, insensible aux rayonnements thermiques des éléments qui l'environnent.

Le dispositif de l'invention comporte un élément (2) de mesure et ses moyens (3) de raccordements électriques, protégés par une gaine (4) et par deux tubes (6) et (9) concentriques, fermés à leurs extrémités, chacun d'eux étant muni de deux fentes longitudinales sensiblement opposées dans le sens de la longueur et angulairement décalées.

L'invention trouve son application dans les industries dans lesquelles interviennent des gaz chauds dont on veut mesurer la température en continu avec précision.

## Description

### DOMAINE TECHNIQUE

La présente invention concerne un dispositif de mesure de la température de gaz chauds.

Elle trouve son application notamment dans les industries de traitement du pétrole brut, les industries chimiques et pétrochimiques, les verreries, les cimenteries, les cokeries, les centrales de production d'énergie électrique.

### ETAT DE LA TECHNIQUE ANTERIEURE

La conduite d'équipements utilisés dans de nombreuses industries nécessite la connaissance précise de la température de gaz. C'est le cas des fours des unités de distillation utilisés dans les usines de traitement du pétrole brut dans lesquelles on souhaite connaître la température des gaz de combustion en continu.

Pour mesurer cette température, on dispose généralement un élément de mesure tel qu'un thermocouple, protégé par une gaine métallique revêtue ou non de céramique, dans la veine gazeuse dont on veut connaître la température.

Les éléments chauds tels que les tubes de fours, les flammes produites par les brûleurs, émettent des rayonnements thermiques qui sont absorbés par la gaine du thermocouple.

Il résulte de ce phénomène que le signal délivré par le thermocouple, qui doit représenter la température du gaz, est en réalité influencé par les éléments qui l'entourent.

Dans le cas de fours dont les brûleurs sont alimentés par un combustible gazeux contenant de l'hydrogène et des hydrocarbures légers comportant moins de 4 atomes de carbone par exemple, l'erreur de mesure peut atteindre + 125°C pour une température de gaz de 800 à 1200°C.

Dans d'autres installations, le thermocouple est soumis à l'influence d'éléments froids, dans ce cas, c'est la gaine du thermocouple qui émet un rayonnement. Ce phénomène est aussi à l'origine d'erreurs de mesures.

Un dispositif connu sous le nom de pyromètre à aspiration permet de pallier ces inconvénients.

Le dispositif comporte une canne de prélèvement de gaz, un moyen d'aspiration du gaz, un élément de mesure de la température du gaz aspiré et des moyens de refroidissement. Une des extrémités de la canne est placée dans la veine de gaz dont on veut mesurer la température, l'autre est reliée aux moyens d'aspiration placés à l'extérieur de l'équipement dans lequel circule le gaz.

L'élément de mesure de la température, par exemple un thermocouple est placé dans la veine de gaz qui circule dans la canne où il est protégé de l'influence du rayonnement des éléments environnants.

Le gaz prélevé traversant les moyens d'aspiration, il est indispensable de les refroidir au moyen d'un liquide adapté.

Ce pyromètre à aspiration présente les inconvénients suivants :
- son installation est complexe et coûteuse, elle nécessite l'amenée au voisinage du point de mesure, d'un fluide de transfert pour alimenter un appareil d'aspiration ou pour une trompe à vide, ou d'électricité dans le cas d'une pompe entraînée par moteur électrique et l'amenée d'un fluide de refroidissement,
- un entretien fréquent est nécessaire pour éviter les bouchages dûs aux particules contenues dans le gaz, notamment s'il s'agit de fumées,
- un entretien fréquent est nécessaire pour nettoyer le circuit de refroidissement ou le circuit de fluide de transfert dans le cas d'utilisation d'une trompe à vide comme moyen d'aspiration du gaz.

Un tel dispositif est adapté pour effectuer des mesures ponctuelles à la demande. Il ne convient pas pour effectuer des mesures en continu sur de longues périodes.

### EXPOSE DE L'INVENTION

La présente invention a justement pour objet de remédier à ces inconvénients et de fournir un dispositif fiable, de mesure précise de la température d'un gaz chaud dont la température est supérieure à 250°C.

Le dispositif de l'invention supprime les effets parasites des rayonnements thermiques des flammes et des éléments environnant sur l'élément de mesure de la température, tout en assurant un très bon contact entre le gaz chaud et l'élément de mesure.

Il présente aussi l'avantage de ne comporter aucune pièce en mouvement et ne nécessite pas une alimentation en fluide de transfert ou de refroidissement.

Il est peu sensible à l'encrassement, facilement démontable et nécessite très peu de maintenance. Il est particulièrement bien adapté à la mesure des gaz chauds en général, et notamment des gaz de combustion et fumées de fours ou de chaudières utilisés dans de nombreuses industries.

A cette fin la présente invention propose un dispositif de mesure de la température d'un gaz chaud, comportant un élément de mesure muni de moyens de raccordements électriques, logés dans une gaine de protection fermée à une de ses extrémités, l'élément de mesure étant situé à 1' extrémité fermée de ladite gaine, caractérisé en ce qu'il comporte en outre un premier tube de protection, de forme cylindrique, entourant l'extrémité fermée de la gaine, muni sur une partie de sa longueur de deux fentes longitudinales sensiblement opposées, de mêmes longueurs et de largeurs différentes, et un deuxième tube de protection de forme cylindrique, de même longueur que le premier tube, entourant le premier tube sur toute sa longueur, muni sur une partie de sa longueur de deux fentes longitudinales sensiblement opposées, de mêmes longueurs et de largeurs différentes supérieures aux largeurs des fentes du premier tube, chaque fente du deuxième tube étant sensiblement opposée longitudinalement à une fente du premier tube et en ce que les deux tubes et la gaine de protection ont leurs axes longitudinaux confondus, leurs sections respectives étant telles qu'un espace existe entre la gaine de protection et le premier tube ainsi qu'entre le premier et le deuxième tube, la gaine de protection étant positionnée longitudinalement pour que l'élément de mesure soit sensiblement au niveau des fentes des premier et deuxième tubes, lesdits tubes étant montés de manière à ce que leurs fentes longitudinales soient décalées angulairement d'un tube à l'autre, et étant fermés à leurs extrémités voisines par deux éléments de fermeture, l'un d'eux comportant d'une part un orifice de passage de la gaine de protection et d'autre part des moyens de fixation à une canne support.

Selon une autre caractéristique de l'invention les tubes de protection sont réalisés en un matériau présentant un pouvoir émissif de radiations constant sur une plage donnée de température du gaz chaud.

Selon une autre caractéristique le dispositif de l'invention comporte des moyens de positionnement angulaire des tubes de protection l'un par rapport à l'autre.

Selon une autre caractéristique de l'invention les fentes des tubes de protection sont positionnées longitudinalement sensiblement à égale distance des extrémités desdits tubes.

Selon une dernière caractéristique de l'invention les tubes de protection ont des sections circulaires.

### BREVE DESCRIPTION DES DESSINS

L'invention sera mieux comprise à l'aide de la description qui suit, d'un mode de réalisation donné à titre d'exemple en référence aux dessins annexés dans lesquels :
- la figure 1 représente schématiquement les principaux éléments constitutifs du dispositif de l'invention en coupe longitudinale,
- la figure 2 représente schématiquement les dispositifs de l'invention en coupe transversale,
- la figure 3 représente en détail les moyens de positionnement angulaires des tubes de protection l'un par rapport à l'autre.

### EXPOSE DETAILLE DE L'INVENTION

D'une manière générale, le dispositif de l'invention est utilisé pour mesurer la température d'un gaz chaud, par exemple le gaz résultant de la combustion d'hydrocarbures liquides ou gazeux utilisés dans des fours de raffineries de pétrole brut.

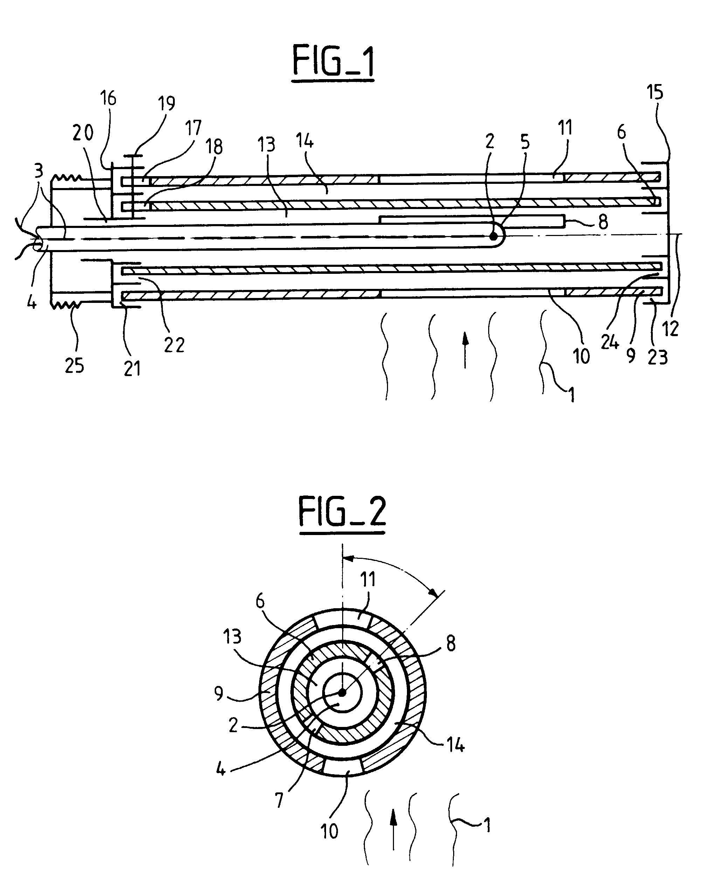

Selon le mode de réalisation représenté sur les figures 1 et 2, le dispositif de l'invention comporte :
- un élément 2 de mesure de la température du gaz 1,
- des moyens 3 de raccordements électriques de l'élément 2 de mesure,
- une gaine 4 de protection,
- un premier tube 6 de protection cylindrique de section circulaire,
- un deuxième tube 9 de protection cylindrique de section circulaire,
- deux éléments 15 et 16 de fermeture,
- des moyens 25 de fixation.

Le dispositif comporte également non représenté sur les figures des moyens électroniques de traitement du signal électrique émis par l'élément de mesure de la température du gaz chaud auxquels il est raccordé.

L'élément de mesure est un thermocouple constitué par la soudure des extrémités de deux fils métalliques de natures différentes, isolés électriquement entre eux sauf à leurs extrémités soudées.

Ces fils métalliques constituant les moyens 3 de raccordements électriques et le thermocouple 2 sont recouverts par une gaine 4 de protection fermée à son extrémité 5, au voisinage de laquelle se trouve le thermocouple 2.

La gaine 4 de protection est recouverte d'un matériau céramique pour augmenter sa résistance à la corrosion. Elle est placée dans l'axe 12 des tubes 6 et 9 de protection.

Le premier tube 6 de protection comporte deux fentes 7 et 8, longitudinales, de mêmes longueurs, inférieures à la longueur du tube 6.

Ces deux fentes 7 et 8 sont sensiblement positionnées longitudinalement l'une en face de l'autre, et sensiblement radialement opposées. Elles ont des largeurs différentes, la fente 7 est moins large que la fente 8.

Le deuxième tube 9 de protection de section circulaire, monté coaxialement avec le premier tube 6 et la gaine 4, de même longueur que le tube 6, comporte lui aussi deux fentes 10 et 11 longitudinales de même longueur que les fentes 7 et 8 du premier tube 6 et posotionnées longitudinalement en face des fentes 7 et 8.

Les fentes 10 et 11 ont des largeurs différentes. La plus petite étant la fente 10 a une largeur supérieure à celle de la fente 8 qui est la fente la plus large du tube 6.

Les tubes 6 et 9 sont positionnés radialement de manière à ce qu'aucune partie des fentes du tube 6 et du tube 9 ne soit en regard. Ainsi aucun rayonnement extérieur au tube 9 ne peut atteindre directement la gaine 4. La valeur de l'angle de décalage est déterminée en fonction des largeurs respectives des fentes 7, 8, 10 et 11.

Les fentes 10 et 7 sont placées sensiblement dans la direction de circulation du gaz 1 chaud.

Deux espaces 13 et 14 existent entre respectivement la gaine 4 et le tube 6 et entre le tube 6 et le tube 9.

La gaine 4 est positionnée longitudinalement pour que l'élément 2 de mesure se trouve sensiblement dans l'axe longitudinal des fentes 7, 8, 10 et 11.

Les tubes 6 et 9 sont fermés à leurs extrémités voisines par des éléments 15 et 16, de fermetures constitués par des cyclindres métalliques munis de gorges 21, 22, 23 et 24 dans lesquelles viennent se loger les extrémités des tubes 6 et 9. Ces éléments 15 et 16 de fermeture sont maintenus entre eux par deux tiges qui les relient, non représentées sur les figures.

L'élément 15 de fermeture est muni d'un orifice circulaire 20 de passage de la gaine 4, et de moyens d'étanchéité pour éviter le passage du gaz chaud, non représentés sur les figures.

Pour raccorder le dispositif à une canne support, l'élément 15 de fermeture comporte un cylindre 25 fileté. Grâce à ces dispositions, une partie du gaz 1 chaud traverse la fente 10, puis circule dans l'espace 4, puis traverse la fente 7, entre en contact avec la gaine 4, traverse la fente 8 puis une partie de l'espace 14 et ressort du tube 9 par la fente 11.

Les largeurs des fentes 10 et 11, ainsi que celles des fentes 7 et 8 étant différentes, il se crée un phénomène Venturi qui facilite la circulation du gaz 1 chaud, autour de la gaine 4 dont l'extrémité 5 contient le thermocouple 2.

Grâce aux éléments qui constituent le dispositif de l'invention et leur disposition, la température du thermocouple 2 est égale à la température du gaz 1 chaud. Les effets parasites, de conduction entre la gaine 4 et les autres éléments sont minimisés, ainsi que les perturbations dues au rayonnement des éléments environnants.

Selon une autre caractéristique de l'invention, les tubes 6 et 9 de protection seront réalisés avantageusement en un matériau céramique qui présente un très faible pouvoir émissif de radiation, pratiquement constant sur une plage de température, 500°C à 1600°C.

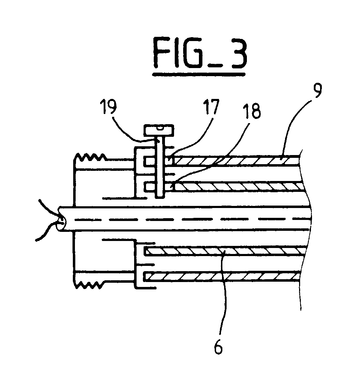

En référence à la figure 3, le dispositif de l'invention comporte des moyens de positionnement angulaire des tubes 6 et 9 de protection, l'un par rapport à l'autre. Les tubes 6 et 9 comportent chacun une encoche 17 et 18 à leur extrémité tournée vers l'élément 16 de fermeture dans lequel vient se loger une vis 19 vissée dans un trou taraudé dans l'élément 16 de fermeture.

Grâce à ces moyens de positionnement, tout risque d'erreur au montage des pièces du dispositif est évité et ainsi que les glissements au cours du temps.

Le mode de réalisation de l'invention décrit ci-dessus est donné à titre d'exemple, de nombreuses variantes seront facilement réalisées par l'homme de métier. Ainsi, les fentes longitudinales pourront être remplacées par des séries de trous de dimensions et de formes adaptées et l'élément 15 de fermeture, des tubes 6 et 9, des extrémités opposées au passage 20 de la gaine 4 pourra être supprimé en munissant le tube 9 d'un fond de forme hémisphérique par exemple.

## Revendications

1. Dispositif de mesure de la température d'un gaz (1) chaud, comportant un élément (2) de mesure muni de moyens (3) de raccordements électriques, logés dans une gaine (4) de protection fermée à une de ses extrémités, l'élément (2) de mesure étant situé à 1' extrémité (5) fermée de ladite gaine (4), caractérisé en ce qu'il comporte en outre un premier tube (6) de protection, de forme cylindrique, entourant l'extrémité (5) fermée de la gaine (4), muni sur une partie de sa longueur de deux fentes (7) et (8) longitudinales sensiblement opposées, de mêmes longueurs et de largeurs différentes, et un deuxième tube (9) de protection de forme cylindrique, de même longueur que le premier tube (6), entourant le premier tube (6) sur toute sa longueur, muni sur une partie de sa longueur de deux fentes (10) et (11) longitudinales sensiblement opposées, de mêmes longueurs et de largeurs différentes supérieures aux largeurs des fentes (7) et (8) du premier tube (6), chaque fente du deuxième tube (9) étant sensiblement opposée longitudinalement à une fente du premier tube (6) et en ce que les deux tubes (6) et (9) et la gaine (4) de protection ont leurs axes longitudinaux confondus, leurs sections respectives étant telles qu'un espace (13) existe entre la gaine (4) de protection et le premier tube (6) ainsi qu'entre le premier et le deuxième tube, la gaine (4) de protection étant positionnée longitudinalement pour que l'élément (2) de mesure soit sensiblement au niveau des fentes (7),(8),(10) et (11) des premier et deuxième tubes (6) et (9), lesdits tubes étant montés de manière à ce que leurs fentes (7),(8),(10) et (11) longitudinales soient décalées angulairement d'un tube à l'autre, et étant fermés à leurs extrémités voisines par deux éléments (15) et (16) de fermeture, l'un d'eux comportant d'une part un orifice (20) de passage de la gaine (4) de protection et d'autre part des moyens (25) de fixation à une canne support.

2. Dispositif selon la revendication 1 caractérisé en ce que les tubes (6) et (9) de protection sont réalisés en un matériau présentant un pouvoir émissif de radiations constant sur une plage donnée de température du gaz (1) chaud.

3. Dispositif selon la revendication 1 ou 2 caractérisé en ce qu'il comporte des moyens de positionnement angulaire des tubes (6) et (9) de protection l'un par rapport à l'autre.

4. Dispositif selon l'une des revendications 1 à 3, caractérisé en ce que les fentes (7),(8),(10) et (11) des tubes (6) et (9) de protection sont positionnées longitudinalement sensiblement à égale distance des extrémités desdits tubes.

5. Dispositif selon l'une des revendications 1 à 4 caractérisé en ce que les tubes (6) et (9) de protection ont des sections circulaires.
